# EUROPÄISCHE PATENTSCHRIFT

(11) **EP 3 447 038 B1**
(45) Veröffentlichungstag und Bekanntmachung des Hinweises auf die Patenterteilung: **11.11.2020**
(21) Anmeldenummer: 17187897.8
(22) Anmeldetag: 25.08.2017
(51) Int. Cl.: C04B 28/02, C04B 18/02, C04B 20/10

(54) **WÄRMEDÄMMGRANULAT MIT REDUZIERTER HYDROPHOBIZITÄT**
THERMAL INSULATION GRANULATE WITH REDUCED HYDROPHOBICITY
GRANULAT ISOLANT THERMIQUEMENT PRÉSENTANT UNE HYDROPHOBICITÉ RÉDUITE

(43) Veröffentlichungstag der Anmeldung: 27.02.2019
(73) Patentinhaber: Evonik Operations GmbH, 45128 Essen (DE)
(72) Erfinder: GEISLER Matthias, 63538 Großkrotzenburg (DE); BOES Ulrich Paul, 60528 Frankfurt a. M. (DE); KIMMEL Vanessa, 63796 Kahl am Main (DE)
(74) Vertreter: Evonik Patent Association

(56) Entgegenhaltungen:
- EP-A1- 0 393 356
- CN-A- 105 000 834
- US-B1- 6 365 638

## Beschreibung

Die vorliegende Erfindung betrifft ein granuläres Siliziumdioxid haltiges Material mit verbesserter Kompatibilität mit wasserbasierten Systemen, sowie Verfahren zu dessen Herstellung und Verwendung eines solchen Materials zur Wärmedämmung.

Effektive Wärmedämmung von Häusern, industriellen Anlagen, Rohrleitungen und desgleichen stellt ein wichtiges volkswirtschaftliches Problem dar. Die Auswahl von Isolierungsmaterialien spielt dabei eine sehr wichtige Rolle. Verbreitet sind als solche die auf organischen Stoffen basierenden Isolierungsmaterialien, wie Polyurethanschäume sowie Wärmedämmungsmaterialien basierend auf anorganischen Oxiden, beispielsweise hochporöses Siliziumdioxid.

Als Basis solcher Siliziumdioxid-basierenden wärmedämmenden Materialien werden üblicherweise die sogenannten Aerogele, sowie gefällte oder pyrogen hergestellte Kieselsäuren verwendet. Weiterführende Informationen zu diesen Kieselsäuretypen sind in Ullmann's Encyclopedia of Industrial Chemistry, Kapitel "Silica" veröffentlicht online am 15.04.2008, DOI: 10.1002/14356007.a23_583.pub3, zu finden.

Auch verschiedene Kombinationen von organischen und anorganischen Isolierungs- oder Bindemittel sind bekannt.

Für die Herstellung von Formulierungen und Kompositen basierend auf anorganischen Füllstoffen (Wärmedämmstoffen) mit organischen oder anorganischen Bindemittel werden die letzten oft als wässrige Gemische oder Dispersionen eingesetzt. Dabei spielt die Kompatibilität von solchen anorganischen Wärmedämmstoffen und wasserbasierten Systemen eine entscheidende Rolle. Die hydrophilen Füllstoffe weisen eine hohe Affinität zu wässrigen Systemen und werden mit denen gut benetzt, wobei die Poren solcher Wärmedämmstoffe komplett mit dem wässrigen System gefüllt werden. Die wärmedämmenden Eigenschaften solcher anorganischen Füllstoffe, die genau auf deren hohe Porosität zurückzuführen sind, gehen dabei zum größten Teil verloren. Deswegen werden oft die hydrophobierten anorganischen Füllstoffe für die Herstellung von wärmedämmenden Formulierungen oder Kompositen basierend auf wasserbasierten Bindemitteln eingesetzt.

In WO 2006/097668 A1 wird ein granuläres Wärmedämmungsmaterial, umfassend hydrophobes pyrogen hergestelltes Siliziumdioxid und ein Trübungsmittel offenbart, das durch Vermischen eines hydrophoben Siliziumdioxids mit Trübungsmittel und die nachfolgende Verdichtung zu Granulaten mit einer Große von 0,25 bis 2,5 mm hergestellt wird. Solche Produkte zeichnen sich durch eine relativ hohe Stampfdichte von 250 bis 450 g/L und Wärmeleitfähigkeit von weniger als 0,05 W/mK aus.

Europäische Anmeldung 17151995.2 offenbart eine etwas andere Herstellung eines hydrophobierten wärmedämmenden Granulats durch (a) Verdichtung eines Gemisches enthaltend eine hydrophile Kieselsäure und ein Trübungsmittel, (b) thermische Behandlung des verdichteten Materials (Granulats) bei 200-1200 °C und (c) Hydrophobierung des thermisch behandelten Granulats mit einem Hydrophobierungsmittel.

WO2007/047970 beschreibt wärmedämmende Komposite enthaltend ein Polymermatrix und darin eingebettete Aerogelpartikel, wobei das Polymer in die Poren des Aerogels im Wesentlichen nicht eindringt. In Ausführungsbeispiel 2 der Anmeldung ist die durch die Hydrophobizität des eingesetzten Aerogels resultierende erschwerte Einbringung dieses Materials in die wasserbasierte Epoxy-Dispersion beschrieben. Dieses Problem wird durch den Einsatz erhöhter Mengen an Tenside gelöst, die Benetzbarkeit hydrophober Partikel mit Wasser verbessern können.

EP 0 393 356 beschreibt SiO2 Granulate auf Basis von pyrogener Kiselsäure. Die Feuchtaufnahme ist 24,2%

Die bisher bekannten auf Siliziumdioxid basierten pulverförmigen und granulären hydrophobierten Wärmedämmungsmaterialien können zwar eine ausreichende Wärmedämmung gewährleisten, sind aber oft mit den wasserbasierten Systemen schlecht kompatibel und lassen sich in solche System nur sehr schwer oder nicht vollständig einarbeiten. Die hydrophilen Wärmedämmungsmaterialien lassen sich in die wässrigen Systeme zwar hervorragend einarbeiten, büßen aber dabei zum größten Teil ihre wärmedämmenden Eigenschaften ein. Das liegt vor allem daran, dass die Poren solcher hydrophilen Partikeln sich schnell mit wasserbasiertem Medium füllen. Dabei wird einerseits die gute wärmedämmenden Eigenschaften aufweisende Luft verdrängt und somit die wärmedämmenden Eigenschaften des Systems insgesamt verschlechtert. Andererseits werden solche mit Flüssigkeit gefüllten Poren beim Härten oft zerrissen, so dass Bereiche mit großen Zwischenräumen entstehen, die eine schlechtere Wärmedämmung als viele kleinere Poren aufweisen. Das Gemisch von hydrophobierten und hydrophilen Wärmedämmungsmaterialien würde teilweise die Vorteile aber auch die Nachteile von beiden diesen Materialtypen aufweisen und würde insgesamt keine vorteilhafte Lösung darstellen. Die Aufgabe der vorliegenden Erfindung war ein granuläres Wärmedämmungsmaterial bereitzustellen, das sich in die wasserbasierten Systeme gut einarbeiten lässt und die guten wärmedämmenden Eigenschaften von dabei gebildeten Formulierungen oder Kompositen hervorruft. Eine weitere Aufgabe der vorliegenden Erfindung war ein Verfahren zur Herstellung solcher granulären Wärmedämmungsmaterialien bereitzustellen.

Diese Aufgaben werden durch Bereitstellung eines Granulats gelöst, welches von 30 bis 95 Gew.-% Siliziumdioxid und eine Wärmeleitfähigkeit von maximal 60 mW/(m*K) aufweist, wobei Siliziumdioxid aus der Gruppe bestehend aus Perlite, Fällungskieselsäuren, pyrogene Kieselsäuren und Gemischen davon ausgewählt ist und dessen Feuchteaufnahme nach DIN EN ISO 12571: 2013-12 bei 93% relativer Luftfeuchtigkeit von 0,01 bis 20 Gew.-%, beträgt, herstellbar nach einem Verfahren umfassend eine thermische Behandlung eines Siliziumdioxid haltigen hydrophobierten Granulats aufweisend eine Feuchteaufnahme nach DIN EN ISO 12571: 2013-12 bei 93% relativer Luftfeuchtigkeit von kleiner 0,2 Gew.-%, bei einer Temperatur von mindestens 200 °C innerhalb von maximal 1 Stunde.

Unter dem Begriff "Granulat" wird in der vorliegenden Erfindung ein körniger, leicht schüttbarer, rieselfähiger Feststoff verstanden.

Das Granulat der vorliegenden Erfindung enthält von 30 bis 95, bevorzugt von 40 bis 90, besonders bevorzugt von 50 bis 85 Gew.-% des Siliziumdioxids. Dabei bezieht sich diese Angabe auf den SiO₂ Gehalt im Granulat ohne eventuell vorhandene Hydrophobierungsmittel oder andere Siliziumdioxid-Modifizierungsmittel zu berücksichtigen, und kann durch Elementaranalyse bestimmt werden.

Das erfindungsgemäße Granulat enthält Siliziumdioxid, bevorzugt in amorpher Form. Dieses Siliziumdioxid beinhaltet ein oder mehrere allgemein bekannten Typen von Kieselsäuren, wie Perlite, Fällungskieselsäuren, pyrogene Kieselsäuren. Bevorzugt enthält das erfindungsgemäße Granulat eine oder mehrere pyrogen hergestellten Kieselsäuren und/oder Fällungskieselsäuren.

Pyrogen hergestelltes Siliziumdioxid, auch pyrogene Kieselsäure genannt, wird mittels Flammenhydrolyse oder Flammenoxidation hergestellt. Dabei werden hydrolysierbare oder oxidierbare Ausgangstoffe in der Regel in einer Wasserstoff-Sauerstoffflamme oxidiert, beziehungsweise hydrolysiert. Als Ausgangsstoffe für pyrogene Verfahren können organische und anorganische Stoffe eingesetzt werden. Besonders geeignet ist Siliziumtetrachlorid. Die so erhaltene hydrophile Kieselsäure ist amorph. Pyrogene Kieselsäuren liegen in der Regel in aggregierter Form vor. Unter "aggregiert" ist zu verstehen, dass sogenannte Primärpartikel, die bei der Genese zunächst entstehen, sich im weiteren Reaktionsverlauf unter Bildung eines dreidimensionalen Netzwerkes fest miteinander verbinden. Die Primärpartikel sind weitestgehend porenfrei und weisen auf ihrer Oberfläche freie Hydroxylgruppen auf.

Das durch Fällung hergestellte Siliziumdioxid (gefällte Kieselsäure, Fällungskieselsäure) bildet sich beispielsweise bei der Umsetzung von Wasserglas-Lösungen (wasserlösliche Natriumsilicate) mit Mineralsäuren.

Das erfindungsgemäße Granulat kann mindestens ein IR-Trübungsmittel enthalten. Ein solches IR-Trübungsmittel verringert die Infrarot-Durchlässigkeit eines Wärmedämmungsmaterials und minimiert somit den Wärmeübergang durch Strahlung.

Bevorzugt wird das IR-Trübungsmittel aus der Gruppe bestehend aus Siliziumkarbid, Titandioxid, Zirkoniumdioxid, Ilmenite, Eisentitanate, Eisenoxide, Zirkoniumsilikate, Manganoxide, Graphite, Ruße und Gemischen davon ausgewählt. Die Partikelgröße der Trübungsmittel liegt in der Regel zwischen 0,1 bis 25 µm. Das erfindungsgemäße Granulat kann von 5 bis 50, bevorzugt von 10 bis 40, besonders bevorzugt von 15 bis 30 Gew.-% eines Trübungsmittels enthalten.

Feuchteaufnahme (massenbezogener Feuchtegehalt) wird nach dem Exsikkatorverfahren gemäß DIN EN ISO 12571: 2013-12 "Wärme- und feuchtetechnisches Verhalten von Baustoffen und Bauprodukten - Bestimmung der hygroskopischen Sorptionseigenschaften bei 93% relativer Luftfeuchtigkeit nach 2 Wochen Exposition bestimmt. Dieser Wert zeigt, wie viel Wasser ein Material aus der feuchten Luftatmosphäre absorbieren kann und gibt Ausschlüsse darüber, ob das Material eine hohe oder niedrige Affinität zum Wasser hat und charakterisiert in Folge seinen Hydrophilitäts- oder Hydrophobizitätsgrad. Die nach dem Exsikkatorverfahren gemäß DIN EN ISO 12571: 2013-12 bestimmte Feuchteaufnahme charakterisiert vor allem die gesamte Hydrophobizität des Granulats, an dessen Oberfläche und im Kern des Granulats.

Die Begriffe "hydrophob" und "Hydrophobizität" im Sinne der vorliegenden Erfindung beziehen sich auf die Partikel mit einer geringen Affinität zu polaren Medien wie Wasser. Die hydrophilen Partikeln weisen dagegen eine hohe Affinität zu polaren Medien wie Wasser auf. Die Hydrophobie der hydrophoben Materialien, auch Hydrophobizität genannt, kann üblicherweise durch die Aufbringung entsprechender unpolaren Gruppen, beispielsweise Organosilangruppen an die Kieselsäureoberfläche erreicht werden.

Das erfindungsgemäße Granulat kann deutlich unterschiedliche Hydrophobizität an der Oberfläche und im Kern des Granulats aufweisen. Das Ausmaß der Hydrophobizität einer hydrophoben Kieselsäure an deren Oberfläche kann unter anderem durch ihre Methanolbenetzbarkeit bestimmt werden, wie beispielsweise in WO2011/076518 A1, Seiten 5-6, näher beschrieben. In reinem Wasser, trennt sich eine hydrophobe Kieselsäure vollständig vom Wasser ab und schwimmt auf dessen Oberfläche ohne zu benetzen. In reinem Methanol dagegen, verteilt sich eine hydrophobe Kieselsäure im ganzen Lösungsmittelvolumen, es findet deren vollständige Benetzung mit Methanol statt. Bei der Messung der Methanolbenetzbarkeit wird ein maximaler Gehalt an Methanol in einem Methanol-Wasser Testgemisch bestimmt, bei dem noch keine Benetzung der Kieselsäure stattfindet, also 100% der eingesetzten Kieselsäure sich nach dem Kontakt mit dem Testgemisch von dem Testgemisch separiert, nicht benetzt bleibt. Dieser Gehalt an Methanol in dem Methanol-Wasser Gemisch in Gew.-% wird Methanolbenetzbarkeit genannt. Je höher eine solche Methanolbenetzbarkeit, desto hydrophober ist die Oberfläche der Kieselsäure. Je niedriger die Methanolbenetzbarkeit, desto geringer ist die Hydrophobie und desto höher ist die Hydrophilie des Materials.

Das erfindungsgemäße Granulat weist eine Methanolbenetzbarkeit von größer als 3, vorzugsweise von 5 bis 60, bevorzugt von 8 bis 50, besonders bevorzugt von 10 bis 40, ganz besonders bevorzugt von 10 bis 35 Gew.-% Methanol Gehalt in einem Methanol-Wasser Gemisch auf.

Der Kohlenstoffgehalt des erfindungsgemäßen Granulats beträgt vorzugsweise von 0,5 bis 20 Gew.-%, bevorzugt von 1 bis 17 Gew.-%, besonders bevorzugt von 1,5 bis 16 Gew.-%, ganz besonders bevorzugt von 2 bis 15 Gew.-%. Der Kohlenstoffgehalt des erfindungsgemäßen Granulats kann dabei durch Elementaranalyse bestimmt werden. Dabei wird die Probe in einen Keramiktiegel eingewogen, mit Verbrennungszuschlägen versehen und in einem Induktionsofen unter einem Sauerstoffstrom erhitzt. Der vorhandene Kohlenstoff wird hierbei zu CO₂ oxidiert. Die CO₂-Gasmenge wird über Infrarotdetektoren quantifiziert. SiC wird dabei nicht verbrannt und beeinflusst somit nicht den Wert des Kohlenstoffanteils. Der angegebene Kohlenstoffgehalt des erfindungsgemäßen Granulats bezieht sich also auf alle kohlenstoffhaltige Bestandteile des Granulats ausgenommen Siliciumkarbid.

Stampfdichten verschiedener pulverförmiger oder grobkörniger granulärer Materialien können nach DIN ISO 787-11:1995 "Allgemeine Prüfverfahren für Pigmente und Füllstoffe - Teil 11: Bestimmung des Stampfvolumens und der Stampfdichte" bestimmt werden. Dabei wird die Fülldichte einer Schüttung nach dem Rütteln und Stampfen gemessen. Das erfindungsgemäße Granulat kann eine Stampfdichte von bis zu 400 g/L, vorzugsweise von 50 bis 300 g/L, bevorzugt von 70 bis 240 g/L, besonders bevorzugt von 90 bis 230 g/L aufweisen.

Eine nummerische mittlere Partikelgröße des erfindungsgemäßen Granulats kann nach ISO13320:2009 durch Laserbeugungs-Partikelgrößenanalyse bestimmt werden. Dabei wird aus der resultierenden gemessenen Partikelgrößenverteilung der Mittelwert d₅₀, der wiedergibt, welche Partikelgroße 50% aller Partikeln nicht übersteigt, als numerische mittlere Partikelgröße definiert. Das erfindungsgemäße Granulat kann einen d₅₀ Wert von größer als 10 µm aufweisen, ist vorzugsweise von 20 bis 4000 µm, bevorzugt von 50 bis 3500 µm, besonders bevorzugt von 100 bis 3000 µm, ganz besonders bevorzugt von 150 bis 2500 µm. In einer besonderen Ausführungsform der Erfindung ist das erfindungsgemäße Granulat frei von Partikeln, die kleiner als 200 µm sind.

Das erfindungsgemäße Granulat kann eine BET Oberfläche von größer als 20 m²/g, bevorzugt von 30 bis 1000 m²/g, besonders bevorzugt von 50 bis 900 m²/g, ganz besonders bevorzugt von 70 bis 800 m²/g aufweisen. Die spezifische Oberfläche, auch vereinfacht BET Oberfläche genannt, wird nach DIN 9277:2014 durch Stickstoffadsorption nach dem Brunauer-Emmett-Teller-Verfahren bestimmt.

Die Wärmeleitfähigkeit des erfindungsgemäßen Granulats, gemessen in einer Schüttung nach EN 12667:2001 bei einer mittleren Messtemperatur von 10 °C, einem Anpressdruck von 250 Pa unter Luftatmosphäre und bei Normaldruck, beträgt weniger als 60 mW/(m*K), bevorzugt von 10 bis 50, besonders bevorzugt von 12 bis 40, ganz besonders bevorzugt von 15 bis 35 mW/(m*K). Zur Bestimmung der Wärmeleitfähigkeit können die Granulate in einem Trockenschrank bei 105 °C bis zur konstanten Masse getrocknet und in einem Exsikkator abgekühlt werden. Anschließend können die Proben als Schüttung präpariert und zur Vermeidung der Feuchtigkeitsaufnahme mit einer dünnen PE Folie bedeckt werden.

Die Wärmeleitfähigkeit von Systemen enthaltend Granulate, wie zum Beispiel einem mineralischen System mit wärmedämmenden Granulaten als Leichtzuschlag, kann wegen der oft begrenzten Probengröße entsprechend der ASTM D7984 bei Raumtemperatur von ca. 25 °C, und einem Aufgewicht von 500 g unter Luftatmosphäre und bei Normaldruck gemessen werden.

Das Granulat der vorliegenden Erfindung kann zur Wärmedämmung, beispielsweise von Wänden, Decken, Fluren, Platten, Rohrleitungen und Röhre, verwendet werden.

Das erfindungsgemäße Granulat kann zur Herstellung eines wasserhaltigen wärmedämmenden Gemisches verwendet werden. Das Granulat der vorliegenden Erfindung kann dafür in ein wasserbasiertes System eingearbeitet werden. Ein daraus resultierendes wärmedämmendes Gemisch kann dann direkt zur Wärmedämmung verwendet werden oder beispielsweise durchs Trocknen oder Aushärten wiederum in ein getrocknetes und/oder ausgehärtetes wärmedämmendes Material umgewandelt werden.

Das wärmedämmende Material kann mindestens ein Bindemittel enthalten, das die einzelnen Teile des gehärteten wärmedämmenden Gemisches untereinander und gegebenenfalls mit einem oder mehreren Füllstoffen und/oder anderen Additiven verbindet und somit die mechanischen Eigenschaften der gehärteten Formulierung verbessern kann. Ein solches Bindemittel kann organische oder anorganische Substanzen enthalten. Das Bindemittel enthält bevorzugt reaktive organische Substanzen. Organische Bindemittel können beispielsweise aus der Gruppe bestehend aus (Meth)acrylate, Alkydharze, Epoxidharze, Gummi arabicum, Kasein, Pflanzenöle, Polyurethane, Silikonharze, Wachs, Zelluloseleim, ausgewählt werden. Solche reaktiven organischen Substanzen können durch beispielsweise Polymerisation, Vernetzungsreaktion oder ein anderes chemisches Reaktionstyp zum Härten des eingesetzten wärmedämmenden Gemisches führen. Die Härtung kann beispielsweise thermisch oder unter Einwirkung der UV- oder anderer Strahlung stattfinden.

Zusätzlich zum organischen Bindemittel oder alternativ dazu, kann das eingesetzte wärmedämmende Material anorganische härtende Substanzen enthalten. Anorganische, auch als mineralisch bezeichnete Bindemittel haben im Wesentlichen die gleiche wie die organischen Bindemittel Aufgabe, Zuschlagsstoffe miteinander zu verbinden. Des Weiteren werden anorganische Bindemittel in nichthydraulische Bindemittel und hydraulische Bindemittel unterteilt. Nichthydraulische Bindemittel sind in Wasser lösliche Bindemittel wie Weißkalk, Dolomitkalk, Gips und Anhydrit, die nur an der Luft erhärten. Hydraulische Bindemittel sind Bindemittel, die an der Luft und unter Wasser erhärten und nach der Härtung in Wasser unlöslich sind. Zu ihnen gehören hydraulische Kalke, Zemente, Putz- und Mauerbinder. Die Wasser haltigen wärmedämmenden Gemische, in die das Granulat der vorliegenden Erfindung eingearbeitet werden kann, umfassen bevorzugt mindestens ein Bindemittel ausgewählt aus der Gruppe bestehend aus Zemente, zementbasiertes Beton, Mörtel, Putz, Putzbinder, Mauerbinder und Gips.

Ein weiterer Gegenstand der vorliegenden Erfindung ist ein Verfahren zur Herstellung des erfindungsgemäßen Granulats, umfassend thermische Behandlung eines Siliziumdioxid haltigen hydrophobierten Granulats aufweisend eine Feuchteaufnahme nach DIN EN ISO 12571: 2013-12 bei 93% relativer Luftfeuchtigkeit von kleiner 0,01 Gew.-%, bei einer Temperatur von mindestens 200 °C innerhalb von maximal 1 Stunde.

Das hydrophobierte Granulat wird gemäß dem Verfahren der Erfindung als Ausgangsstoff für die Herstellung von erfindungsgemäßen Granulats eingesetzt und weist bevorzugt eine Methanolbenetzbarkeit von größer als 10, besonders bevorzugt von 15 bis 80, ganz besonders bevorzugt von 20 bis 60, insbesondere bevorzugt von 30 bis 50 Gew.-% Methanol Gehalt in einem Methanol-Wasser Gemisch auf. Der Kohlenstoffgehalt dieses hydrophobierten Granulats, der Vorstufe des erfindungsgemäßen Granulats, beträgt vorzugsweise von 1 bis 30 Gew.-%, bevorzugt von 2 bis 20 Gew.-%, besonders bevorzugt von 3 bis 18 Gew.-%, ganz besonders bevorzugt von 5 bis 16 Gew.-% und kann durch Elementaranalyse wie zuvor beschrieben bestimmt werden.

Die Herstellung des hydrophobierten Granulats kann Hydrophobierung einer hydrophilen Vorstufe des hydrophobierten Granulats mit einem Hydrophobierungsmittel umfassen. Das dabei eingesetzte Hydrophobierungsmittel kann eine siliziumhaltige Verbindung enthalten, die bevorzugt aus der Gruppe bestehend aus Halogensilanen, Alkoxysilanen, Silazanen oder Siloxanen ausgewählt wird. Bei einer solchen siliziumhaltigen Verbindung handelt es sich besonders bevorzugt um eine flüssige Verbindung mit wenigstens einer Alkylgruppe und einem Siedepunkt von weniger als 200°C. Sie wird bevorzugt aus der Gruppe bestehend aus CH₃SiCl₃, (CH₃)₂SiCl₂, (CH₃)₃SiCl, C₂H₅SiCl₃, (C₂H₅)₂SiCl₂, (C₂H₅)₃SiCl, C₃H₈SiCl₃, CH₃Si(OCH₃)₃, (CH₃)₂Si(OCH₃)₂, (CH₃)₃SiOCH₃, C₂H₅Si(OCH₃)₃, (C₂H₅)₂Si(OCH₃)₂, (C₂H₅)₃SiOCH₃, C₈Hi₅Si(OC₂H₅)₃, C₈Hi₅Si(OCH₃)₃, (H₃C)₃SiNHSi(CH₃)₃ und Mischungen hiervon ausgewählt. Besonders bevorzugt sind (H₃C)₃SiNHSi(CH₃)₃ und (CH₃)₂SiCl₂.

Für die Herstellung des hydrophobierten Granulats kann das Hydrophobierungsmittel in flüssigem oder gasförmigem, besonders bevorzugt in einem gasförmigen Zustand eingesetzt werden.

Die genaue Abfolge der zum hydrophobierten Granulat führenden Prozessschritte ist nicht eingeschränkt, es können im Prinzip alle zu Herstellung von hydrophoben Granulaten geeigneten Methoden eingesetzt werden.

Das hydrophobierte Granulat kann beispielsweise durch die folgende Schritte hergestellt werden: 1) Vermischung eines hydrophilen Siliziumdioxids mit wenigstens einem IR-Trübungsmittel; 2) Verdichtung des in Schritt 1) erhaltenen Gemisches zu einem Granulat; 3) Thermische Behandlung des in Schritt 2) hergestellten Granulats bei einer Temperatur von 200 bis 1200 °C; 4) Hydrophobierung des thermisch behandelten Granulats aus dem Schritt 3) mit einem Hydrophobierungsmittel. Ein solches Verfahren ist in der europäischen Anmeldung 17151995.2 beschrieben.

Thermische Behandlung des hydrophobierten Granulats gemäß dem erfindungsgemäßen Verfahren erfolgt bei einer Temperatur von mindestens 200 °C, bevorzugt von 400 bis 1500 °C, besonders bevorzugt von 500 bis 1200, ganz besonders bevorzugt von 600 bis 1000 °C. In einer besonders bevorzugten Ausführungsform der Erfindung wird diese thermische Behandlung in Gegenwart eines Oxidationsmittels durchgeführt. Als solches ist besonders bevorzugt Sauerstoff, das erfindungsgemäße Verfahren kann in diesem Fall in Gegenwart von Luft durchgeführt werden. Besonders vorteilhaft ist es thermische Behandlung des hydrophobierten Granulats bei einer Temperatur von 500 bis 1200 °C in Gegenwart von Luft durchzuführen.

Die Durchführungsdauer der thermischen Behandlung des hydrophobierten Granulats im erfindungsgemäßen Verfahren beträgt maximal 1 Stunde. Bevorzugt wird allerdings die thermische Behandlung innerhalb von 0,1 bis 1000 Sekunden, besonders bevorzugt von 0,5 bis 500 Sekunden, ganz besonders bevorzugt von 1 bis 200 Sekunden, durchgeführt.

Das Verfahren der vorliegenden Erfindung kann diskontinuierlich (batchweise), semi-kontinuierlich oder kontinuierlich durchgeführt werden. In einer besonders bevorzugten Ausführungsform der Erfindung wird das Verfahren kontinuierlich durchgeführt. Dabei können alle, dem Fachmann bekannten und für die thermische Behandlung geeigneten Apparate verwendet werden. Beispielsweise kann die thermische Behandlung des erfindungsgemäßen Verfahrens kontinuierlich in einem Drehrohrofen durchgeführt werden.

Thermische Behandlung des hydrophobierten Granulats führt zur Abbau von hydrophoben Oberflächenmodifizierungsgruppen, beispielsweise Alkylsilylgruppen. Das Ausmaß eines solchen Abbaus (Dehydrophobierung) kann über die entsprechende Einstellung der Temperatur und der Dauer der thermischen Behandlung gesteuert werden: bei der Wahl einer höheren Temperatur kann es notwendig sein, die Dauer der thermischen Behandlung zu reduzieren um einen geforderten Grad der Dehydrophobierung zu erreichen. Um einen höheren Grad der Dehydrophobierung zu erreichen kann generell eine höhere Temperatur und/oder längere Dauer der thermischen Behandlung gewählt werden. Der Grad einer solchen Dehydrophobierung kann beispielsweise anhand der Änderung des Kohlenstoffgehalts verfolgt werden. Die Temperatur und die Dauer der thermischen Behandlung wird dabei bevorzugt so gewählt, dass der Kohlenstoffgehalt während der Durchführung dieses Schrittes um von 0,5 bis 50 %, besonders bevorzugt von 2 bis 30%, ganz besonders bevorzugt von 5 bis 20% des ursprünglichen Wertes im unbehandelten hydrophobierten Granulat reduziert wird. Dabei kann der Kohlenstoffgehalt wie zuvor beschrieben, durch Elementaranalyse sowohl in dem unbehandelten hydrophobierten Granulat als auch im erfindungsgemäßen Granulat, bestimmt werden.

### Beispiele

### Vergleichsbeispiel 1

Das granuläre Material wurde wie in der Europäischen Anmeldung 17151995.2, Beispiel 1 detailliert beschrieben, hergestellt, entsprechend analysiert und getestet. Die Stoffeigenschaften dieses Materials sind in Tabelle 1 zusammengefasst, die Verwendung in einem wasserbasierten wärmedämmenden Gemisch - in der Tabelle 2.

### Vergleichsbeispiel 2

Ein kommerzielles hydrophobiertes Aerogel Granulat, Hersteller Cabot, Produktname Enova IC3120, Partikelgröße von 0,1 bis 1,2 mm wurde unbehandelt unter den gleichen Bedingungen wie die anderen Materialien analysiert und getestet. Die Stoffeigenschaften dieses Materials sind in Tabelle 1 zusammengefasst, die Verwendung in einem wasserbasierten wärmedämmenden Gemisch - in der Tabelle 2.

### Vergleichsbeispiel 3

Das hydrophile Granulat wurde aus pyrogener Kieselsäure mit BET 200 m²/g (Aerosil® 200, Hersteller: Evonik Resource Eficiency GmbH, 80 Gew.-%) und SiC (20 Gew.-%) nach einem in Beispiel 1 von WO 2006/097668 A1 beschriebenen Verfahren hergestellt und dabei zu einer Schüttdichte von 360 g/l verdichtet. Die Stoffeigenschaften dieses Materials sind in Tabelle 1 zusammengefasst, die Verwendung in einem wasserbasierten wärmedämmenden Gemisch - in der Tabelle 2.

### Vergleichsbeispiel 4

Das Aerogel-Material aus dem Vergleichsbeispiel 2 wurde innerhalb von 3 Stunden bei 500°C in einer dünnen (< 1 mm) Schicht im Ofen an der Luft thermisch behandelt. Die Stoffeigenschaften dieses Materials sind in Tabelle 1 zusammengefasst, die Verwendung in einem wasserbasierten wärmedämmenden Gemisch - in der Tabelle 2.

### Beispiel 1

Das Granulat aus dem Vergleichsbeispiel 1 wurde in einer dünnen (< 1 mm) Schicht auf einer dauerhaft sich bewegenden, mit einem Gasbrenner auf ca 600-700 °C erhitzten Edelstahloberfläche innerhalb von 90 Sekunden an der Luft thermisch behandelt. Das Material wurde dann schnell von der Heißoberfläche entfernt und an der Luft bis Raumtemperatur abgekühlt. Die Stoffeigenschaften dieses Materials sind in Tabelle 1 zusammengefasst, die Verwendung in einem wasserbasierten wärmedämmenden Gemisch - in der Tabelle 2.

### Beispiel 2

Das Granulat aus dem Vergleichsbeispiel 2 wurde in einer dünnen (< 1 mm) Schicht auf einer dauerhaft sich bewegenden, mit einem Gasbrenner auf ca. 600-700 °C erhitzten Edelstahloberfläche innerhalb von 20 Sekunden an der Luft thermisch behandelt. Das Material wurde dann schnell von der Heißoberfläche entfernt und an der Luft bis Raumtemperatur abgekühlt. Die Stoffeigenschaften dieses Materials sind in Tabelle 1 zusammengefasst, die Verwendung in einem wasserbasierten wärmedämmenden Gemisch - in der Tabelle 2.

**Tabelle 1 Stoffeigenschaften der Granulate**

| Beispiel | Termische Behandlung, °C | Termische Behandlung, Dauer | Wärmeleitfähigkeit, mW/(m*K) | Feuchteaufnahme, % | C-Gehalt, % | Methanolbenetzbarkeit, % MeOH |
|---|---|---|---|---|---|---|
| Vgl.Bsp. 1 | - | - | 30,2 | 0,000 | 6,6 | 40-45 |
| Vgl.Bsp. 2 | - | - | 21,0 | 0,002 | 10,3 | 40-45 |
| Vgl.Bsp. 3 | - | - | 32,4 | 24,2 | 0,082 | 0 |
| Vgl.Bsp. 4 | 500 | 3 Std | 22,2 | 66,3 | 0,024 | 0 |
| Beispiel 1 | 600-700 | 90 s | 30,3 | 0,524 | 6,1 | 20-30 |
| Beispiel 2 | 600-700 | 20 s | 22,0 | 7,302 | 8,5 | 20-30 |

Stoffeigenschaften der verwendeten Materialien wurden nach folgenden Methoden bestimmt:

### Wärmeleitfähigkeit der Granulate

Zur Bestimmung der Wärmeleitfähigkeit wurden die Granulate in einem Trockenschrank bei 105 °C bis zur konstanten Masse getrocknet und in einem Exsikkator abgekühlt. Anschließend wurden die Proben als Schüttung präpariert und zur Vermeidung der Feuchtigkeitsaufnahme mit einer dünnen PE Folie bedeckt. Die Wärmeleitfähigkeit des jeweiligen Granulats wurde in der Schüttung nach EN 12667:2001 bei einer mittleren Messtemperatur von 10 °C, einem Anpressdruck von 250 Pa unter Luftatmosphäre und bei Normaldruck gemessen.

### Feuchteaufnahme

Feuchteaufnahme (massenbezogener Feuchtegehalt, Gew.-%) wurde nach dem Exsikkatorverfahren gemäß DIN EN ISO 12571: 2013-12 "Wärme- und feuchtetechnisches Verhalten von Baustoffen und Bauprodukten - Bestimmung der hygroskopischen Sorptionseigenschaften bei 93% relativer Luftfeuchtigkeit nach 2 Wochen Exposition bestimmt.

### Kohlenstoffgehalt

Die Bestimmung des Kohlenstoffgehaltes erfolgt mittels eines Elementanalysators der Firma LECO (CS 600). Dabei wird die Probe in einen Keramiktiegel eingewogen, mit Verbrennungszuschlägen versehen und in einem Induktionsofen unter einem Sauerstoffstrom erhitzt. Der vorhandene Kohlenstoff wird hierbei zu CO₂ oxidiert. Diese Gasmenge wird über Infrarotdetektoren quantifiziert. Vor der eigentlichen Messung wird eine Kalibrierung des Geräts mit geeignetem Referenzmaterial durchgeführt. Nachdem der Tiegel in den Induktionsofen eingesetzt wurde, wird die automatische Messung und Auswertung gestartet. Pro Probe werden Mehrfachbestimmungen durchgeführt, ein Mittelwert daraus wird in Gew.-% als Ergebnis angegeben. SiC wird dabei nicht verbrannt und beeinflusst somit nicht den Wert des Kohlenstoffanteils.

### Methanolbenetzbarkeit

Die Granulatprobe wird handvermahlen. Die Pulvermischung wird über ein 800µm Sieb gesiebt, der Siebrückstand wird verworfen. Von der gesiebten Probe werden 200 ± 5mg auf einer Analysenwaage in Zentrifugenröhrchen genau eingewogen. Es werden zu jeder Einwaage 8,0 ml Methanol/Wasser Gemisch (von 0 Vol.-% bis 90 Vol. % MeOH, mit jeweils 5 Vol.-% Steigerung an Methanolgehalt) mit Hilfe einer Eppendorfpipette (10 ml) zugegeben. Die Röhrchen werden gut verschlossen und 30 Sekunden im Turbula-Mischer homogen gemischt. Anschließend werden die Proben 5 Minuten bei 2500 Upm zentrifugiert.

Der angegebene Wert der Methanolbenetzbarkeit in Gew.-% bezieht sich auf den maximalen Gehalt an Methanol in einem Methanol-Wasser Testgemisch, bei dem noch keine Benetzung der Kieselsäure stattfindet, also 100% der eingesetzten Kieselsäure sich nach dem Kontakt mit dem Testgemisch von diesem trennt, und nicht benetzt auf der Oberfläche des Lösungsmittels bleibt.

Wie man aus den in der Tabelle 1 zusammengefassten Stoffdaten leicht erkennen kann, führt eine kurzzeitige Temperaturbehandlung gemäß der Erfindung zur Reduzierung der Hydrophobizität der ursprünglich hydrophoben Granulate aus den Vergleichsbeispielen 1 und 2, was sich in entsprechender Reduzierung des Kohlenstoffgehaltes und Methanolbenetzbarkeit für Granulate aus den Beispielen 1 und 2 wiederspiegelt. Eine dauerhafte Temperaturbehandlung (Vergleichsbeispiel 4) führt dagegen zu einem kompletten Verlust der Hydrophobie.

Der Wert der Feuchteaufnahme gemäß DIN EN ISO 12571:2013-12 bei 93 % relativer Luftfeuchte erlaubt dabei zwischen komplett hydrophoben (Feuchteaufnahme = 0%), komplett hydrophilen (Feuchteaufnahme > 20%) und erfindungsgemäßen, teilweise hydrophoben Granulaten (Feuchteaufnahme von 0,01 bis 20%) genau zu unterscheiden.

### Beispiele 3-8

### Verwendung der Granulate in einem wasserbasiertem System

Herstellung des wasserbasierten Systems: 60g eines Fliesenklebers (Zementhaltiger Mörtel für innen und außen nach EN 12004, Typ C - Klasse 1T, hergestellt durch quick-mix Gruppe & Co KG.) und 26 g Wasser wurden für 60 Sekunden manuell mit einem Spachtel gemischt. Einarbeitung der Granulate ins wasserbasierte System: jeweils 3 Gramm eines jeweiligen Granulats wurde auf den angemischten Fliesenkleber gegeben und mittels Speedmixer DAC 150 FV eingemischt. Anschließend wurden die Proben 7 Tage lang bei Normalklima getrocknet. Abschließend wurden die nicht gebundenen Granulate abgekippt, gewogen und es wurde der Anteil an nicht gebundener Granulate bezogen auf die Gesamtmasse der eingesetzten Granulate bestimmt (Tabelle 2).

Die Wärmeleitfähigkeit der ausgetrockneten zementhaltigen Formulierungen mit darin eingearbeiteten und homogen verteilten Granulaten entsprechend den Anteilen an eingearbeiteten Granulaten aus Beispielen 3-8 wurde mittels dem TCi Thermal Conductivity Analyzer von C-Therm bei Raumtemperatur bestimmt, um den Effekt der Wärmedämmung zu zeigen (Tabelle 2).

### Wärmeleitfähigkeit der Systeme enthaltend Granulate

Wärmeleitfähigkeit der Systeme enthaltend Granulate wurde mittels der Modified Transient Plane Source (Hersteller des Messgerätes C-Therm, Gerätename: TCi Thermal Conductivity Analyzer, verwendete Methode/Technik: Modified Transient Plane Source (MTPS)) entsprechend der ASTM D7984 bei Raumtemperatur von ca. 25 °C, und einem Aufgewicht von 500 g unter Luftatmosphäre und bei Normaldruck gemessen.

**Tabelle 2 Verwendung der Granulate in einem wasserbasiertem System**

| Beispiel | Material | Anteil nicht gebundener Granulate bezogen auf die Einsatzmasse, % | Wärmeleitfähigkeit, W/(m*K) |
|---|---|---|---|
| 3 | Vergleichsbeispiel 1 | 49 | 0,51 |
| 4 | Vergleichsbeispiel 2 | 9 | 0,56 |
| 5 | Vergleichsbeispiel 3 | 0 | 0,64 |
| 6 | Vergleichsbeispiel 4 | 0 | 0,63 |
| 7 | Beispiel 1 | 17 | 0,44 |
| 8 | Beispiel 2 | 2 | 0,42 |

Die in der Tabelle 2 zusammengefassten Ergebnisse zeigen, dass die erfindungsgemäßen Granulate sich besser als die entsprechenden komplett hydrophoben Materialien ins wasserbasierte System einarbeiten lassen, wodurch insgesamt bessere wärmedämmende Eigenschaften (geringere Wärmeleitfähigkeit) der resultierenden Formulierungen zustande kommen. Die komplett hydrophilen Granulate (Vergleichsbeispiele 3 und 4) lassen sich ins wasserbasierte System zwar gut einarbeiten, zeigen aber schlechtere als erfindungsgemäße Granulate wärmedämmenden Eigenschaften der resultierenden wärmedämmenden Gemischen.

## Patentansprüche

1. Granulat, enthaltend von 30 bis 95 Gew.-% Siliziumdioxid und aufweisend eine Wärmeleitfähigkeit von maximal 60 mW/(m*K),
**dadurch gekennzeichnet, dass**
das Siliziumdioxid eine oder mehrere pyrogen hergestellten Kieselsäuren, Fällungskieselsäuren und/oder mindestens ein Aerogel ist und
das Granulat eine Feuchteaufnahme nach DIN EN ISO 12571: 2013-12 bei 93% relativer Luftfeuchtigkeit von 0,01 bis 20 Gew.-% aufweist
herstellbar nach einem Verfahren umfassend eine thermische Behandlung eines Siliziumdioxid haltigen hydrophobierten Granulats aufweisend eine Feuchteaufnahme nach DIN EN ISO 12571: 2013-12 bei 93% relativer Luftfeuchtigkeit von kleiner 0,2 Gew.-%, bei einer Temperatur von mindestens 200 °C innerhalb von maximal 1 Stunde.

2. Granulat nach Anspruch 1,
**dadurch gekennzeichnet, dass**
das Granulat nach einem Verfahren umfassend eine thermische Behandlung eines Siliziumdioxid haltigen hydrophobierten Granulats aufweisend eine Feuchteaufnahme nach DIN EN ISO 12571: 2013-12 bei 93% relativer Luftfeuchtigkeit von kleiner 0,01 Gew.-%, bei einer Temperatur von mindestens 200 °C innerhalb von maximal 1 Stunde, herstellbar ist.

3. Granulat nach Anspruch 2,
**dadurch gekennzeichnet, dass**
das Granulat ein IR-Trübungsmittel ausgewählt aus der Gruppe bestehend aus Siliziumkarbid, Titandioxid, Zirkoniumdioxid, Ilmenite, Eisentitanate, Eisenoxide, Zirkoniumsilikate, Manganoxide, Graphite, Ruße und Gemischen davon, enthält.

4. Granulat nach Anspruch 2,
**gekennzeichnet durch** eine Methanolbenetzbarkeit von 8 bis 50 Gew.-% Methanol Gehalt in einem Methanol-Wasser Gemisch.

5. Granulat nach Anspruch 2,
**gekennzeichnet durch** einen Kohlenstoffgehalt von 1 bis 17 Gew.-%.

6. Granulat nach Anspruch 2,
**gekennzeichnet durch** eine Stampfdichte von 70 bis 240 g/L.

7. Granulat gemäß Anspruch 2,
**gekennzeichnet durch** eine nummerische mittlere Partikelgröße d₅₀ von 50 bis 3500 µm.

8. Granulat gemäß Anspruch 2 herstellbar nach einem Verfahren bei dem die Herstellung des hydrophobierten Granulats Hydrophobierung einer hydrophilen Vorstufe des hydrophobierten Granulats mit einem Hydrophobierungsmittel umfasst.

9. Granulat gemäß Anspruch 8,
herstellbar nach einem Verfahren umfassend die folgenden Schritte:
1) Vermischung eines hydrophilen Siliziumdioxids mit wenigstens einem IR Trübungsmittel;
2) Verdichtung des in Schritt 1) erhaltenen Gemisches zu einem Granulat;
3) Thermische Behandlung des in Schritt 2) hergestellten Granulats bei einer Temperatur von 200 bis 1200 °C;
4) Hydrophobierung des thermisch behandelten Granulats aus dem Schritt 3) mit einem Hydrophobierungsmittel.

10. Granulat gemäß Anspruch 8,
herstellbar nach einem Verfahren bei dem das eingesetzte Hydrophobierungsmittel aus der Gruppe bestehend aus Halogensilanen, Alkoxysilanen, Silazanen oder Siloxanen ausgewählt wird.

11. Granulat gemäß Anspruch 9,
herstellbar nach einem Verfahren, bei dem
die thermische Behandlung des hydrophobierten Granulats bei einer Temperatur von 400 bis 1500 °C durchgeführt wird.

12. Granulat gemäß Anspruch 9,
herstellbar nach einem Verfahren, bei dem
die thermische Behandlung des hydrophobierten Granulats innerhalb von 0.1 bis 1000 Sekunden durchgeführt wird.

13. Granulat gemäß Anspruch 9,
herstellbar nach einem Verfahren, bei dem
die Temperatur und Dauer der thermischen Behandlung des hydrophobierten Granulats so ausgewählt wird, dass der Kohlenstoffgehalt während der Durchführung dieses Schrittes um von 0,5 bis 50 % des ursprünglichen Wertes im unbehandelten hydrophobierten Granulat reduziert wird.

14. Verwendung des Granulats gemäß Anspruch 2 zur Herstellung eines Wasser haltigen wärmedämmenden Gemisches.

## Claims

1. Granular material containing from 30% to 95% by weight of silicon dioxide and having a thermal conductivity of not more than 60 mW(m*K),
**characterized in that**
the silicon dioxide is one or more fumed silicas, precipitated silicas and/or at least one aerogel and the granular material has a moisture absorption according to DIN EN ISO 12571: 2013-12 at 93% relative humidity of 0.01% to 20% by weight,
producible by a method comprising a thermal treatment of a silicon dioxide-containing hydrophobized granular material having a moisture absorption according to DIN EN ISO 12571: 2013-12 at 93% relative humidity of less than 0.2% by weight, at a temperature of at least 200°C within a maximum of 1 hour.

2. Granular material according to Claim 1,
**characterized in that**
the granular material is producible by a method comprising a thermal treatment of a silicon dioxide-containing hydrophobized granular material having a moisture absorption according to DIN EN ISO 12571: 2013-12 at 93% relative humidity of less than 0.1% by weight, at a temperature of at least 200°C within a maximum of 1 hour.

3. Granular material according to Claim 2,
**characterized in that**
the granular material contains an IR opacifier selected from the group consisting of silicon carbide, titanium dioxide, zirconium dioxide, ilmenite, iron titanate, iron oxides, zirconium silicate, manganese oxides, graphites, carbon blacks and mixtures thereof.

4. Granular material according to Claim 2,
**characterized by** a methanol wettability of 8% to 50% by weight of methanol content in a methanol-water mixture.

5. Granular material according to Claim 2,
**characterized by** a carbon content of 1% to 17% by weight.

6. Granular material according to Claim 2,
**characterized by** a tamped density of 70 to 240 g/L.

7. Granular material according to Claim 2,
**characterized by** a numerical median particle size d₅₀ of 50 to 3500 µm.

8. Granular material according to Claim 2, producible by a method in which the production of the hydrophobized granular material comprises hydrophobizing a hydrophilic precursor of the hydrophobized granular material with a hydrophobizing agent.

9. Granular material according to Claim 8,
producible by a method comprising the following steps:
1) mixing a hydrophilic silicon dioxide with at least one IR opacifier;
2) compacting the material obtained in step 1) to give a granular material;
3) subjecting the granular material produced in step 2) to thermal treatment at a temperature of 200 to 1200°C;
4) hydrophobizing the granular material that has been subjected to thermal treatment from step 3) with a hydrophobizing agent.

10. Granular material according to Claim 8,
producible by a method in which the hydrophobizing agent used is selected from the group consisting of halosilanes, alkoxysilanes, silazanes or siloxanes.

11. Granular material according to Claim 9,
producible by a method in which
the thermal treatment of the hydrophobized granular material is performed at a temperature of 400 to 1500°C.

12. Granular material according to Claim 9,
producible by a method in which
the thermal treatment of the hydrophobized granular material is performed within 0.1 to 1000 seconds.

13. Granular material according to Claim 9,
producible by a method in which
the temperature and duration of the thermal treatment of the hydrophobized granular material are selected such that the carbon content is reduced by from 0.5% to 50% of the original value in the untreated hydrophobized granular material during the performance of this step.

14. Use of the granular material according to Claim 2 for production of a water-containing thermal insulating mixture.

## Revendications

1. Granulat, contenant de 30 à 95 % en poids de dioxyde de silicium et présentant une conductivité thermique d'au plus 60 mW/(m*K),
**caractérisé en ce que**
le dioxyde de silicium est une ou plusieurs silices fabriquées par voie pyrogène, silices précipitées et/ou au moins un aérogel, et
le granulat présente une absorption d'humidité selon DIN EN ISO 12571:2013-12 à 93 % d'humidité relative de l'air de 0,01 à 20 % en poids,
pouvant être fabriqué par un procédé comprenant un traitement thermique d'un granulat hydrophobé contenant du dioxyde de silicium présentant une absorption d'humidité selon DIN EN ISO 12571:2013-12 à 93 % d'humidité relative de l'air de moins de 0,2 % en poids, à une température d'au moins 200 °C en au plus 1 heure.

2. Granulat selon la revendication 1, **caractérisé en ce que** le granulat peut être fabriqué par un procédé comprenant un traitement thermique d'un granulat hydrophobé contenant du dioxyde de silicium présentant une absorption d'humidité selon DIN EN ISO 12571:2013-12 à 93 % d'humidité relative de l'air de moins de 0,01 % en poids, à une température d'au moins 200 °C en au plus 1 heure.

3. Granulat selon la revendication 2, **caractérisé en ce que** le granulat contient un agent opacifiant IR choisi dans la groupe constitué par le carbure de silicium, le dioxyde de titane, le dioxyde de zirconium, l'ilménite, le titanate de fer, l'oxyde de fer, le silicate de zirconium, l'oxyde de manganèse, le graphite, le noir de carbone et les mélanges de ceux-ci.

4. Granulat selon la revendication 2, **caractérisé par** une mouillabilité par du méthanol de 8 à 50 % en poids de teneur en méthanol dans un mélange méthanol-eau.

5. Granulat selon la revendication 2, **caractérisé par** une teneur en carbone de 1 à 17 % en poids.

6. Granulat selon la revendication 2, **caractérisé par** une densité tassée de 70 à 240 g/l.

7. Granulat selon la revendication 2, **caractérisé par** une taille de particule moyenne numérique d₅₀ de 50 à 3 500 µm.

8. Granulat selon la revendication 2, pouvant être fabriqué par un procédé selon lequel la fabrication du granulat hydrophobé comprend l'hydrophobation d'un précurseur hydrophile du granulat hydrophobé avec un agent d'hydrophobation.

9. Granulat selon la revendication 8, pouvant être fabriqué par un procédé comprenant les étapes suivantes :
1) le mélange d'un dioxyde de silicium hydrophile avec au moins un opacifiant IR ;
2) le compactage du mélange obtenu dans l'étape 1) en un granulat ;
3) le traitement thermique du granulat fabriqué dans l'étape 2) à une température de 200 à 1 200 °C ;
4) l'hydrophobation du granulat traité thermiquement de l'étape 3) avec un agent d'hydrophobation.

10. Granulat selon la revendication 8, pouvant être fabriqué par un procédé selon lequel l'agent d'hydrophobation utilisé est choisi dans le groupe constitué par les halogénosilanes, les alcoxysilanes, les silazanes ou les siloxanes.

11. Granulat selon la revendication 9, pouvant être fabriqué par un procédé selon lequel le traitement thermique du granulat hydrophobé est réalisé à une température de 400 à 1 500 °C.

12. Granulat selon la revendication 9, pouvant être fabriqué par un procédé selon lequel le traitement thermique du granulat hydrophobé est réalisé en 0,1 à 1 000 secondes.

13. Granulat selon la revendication 9, pouvant être fabriqué par un procédé selon lequel la température et la durée du traitement thermique du granulat hydrophobé sont choisies de telle sorte que la teneur en carbone soit réduite pendant la réalisation de cette étape de 0,5 à 50 % de la valeur initiale dans le granulat hydrophobé non traité.

14. Utilisation du granulat selon la revendication 2 pour la fabrication d'un mélange isolant thermique contenant de l'eau.
